Europäisches Patentamt

European Patent Office

Office européen des brevets

(11) Veröffentlichungsnummer: **0 531 371 B1**

(12) **EUROPÄISCHE PATENTSCHRIFT**

(45) Veröffentlichungstag der Patentschrift: **13.12.95**

(51) Int. Cl.6: **C10B 53/00**

(21) Anmeldenummer: **91909963.0**

(22) Anmeldetag: **23.05.91**

(86) Internationale Anmeldenummer:
**PCT/EP91/00959**

(87) Internationale Veröffentlichungsnummer:
**WO 91/18960 (12.12.91 91/28)**

(54) **VERFAHREN ZUR VERWERTUNG VON ORGANISCHEN ABFÄLLEN UND VORRICHTUNG ZUR DURCHFÜHRUNG DES VERFAHRENS**

(30) Priorität: **26.05.90 DE 4017089**
**21.09.90 DE 4029880**
**06.12.90 DE 4038897**
**06.12.90 DE 4038896**
**21.09.90 DE 4029879**
**19.12.90 DE 4040672**
**06.03.91 DE 4107046**

(43) Veröffentlichungstag der Anmeldung:
**17.03.93 Patentblatt 93/11**

(45) Bekanntmachung des Hinweises auf die
Patenterteilung:
**13.12.95 Patentblatt 95/50**

(84) Benannte Vertragsstaaten:
**AT BE CH DE DK ES FR GB GR IT LI LU NL SE**

(56) Entgegenhaltungen:
**DE-A- 3 814 463**
**FR-A- 2 137 664**
**GB-A- 2 110 231**
**US-A- 3 984 288**

(73) Patentinhaber: **MENGES, Georg**
**Am Beulardstein 19**
**D-52072 Aachen (DE)**

(72) Erfinder: **MENGES, Georg, Prof.Dr.-Ing.**
**Am Beulardstein 19**
**D-5100 Aachen (DE)**
Erfinder: **FISCHER, Reinhard, Dr.**
**Teichstr. 14**
**D-5100 Aachen (DE)**
Erfinder: **LACKNER, Volker, Dipl.-Ing.**
**Zollernstr. 1**
**D-5100 Aachen (DE)**

(74) Vertreter: **Mayer-Pohske, Joachim-Wolfgang**
**Rechtsanwälte Dr. Dettmeier & Partner**
**Schenkelstrasse 17**
**D-52349 Düren (DE)**

Rank Xerox (UK) Business Services
(3. 10/3.0 9/3.3.3)

**Beschreibung**

Die Erfindung betrifft ein Verfahren zur Verwertung von mindestens überwiegend aus Makromolekülen bestehenden organischen Abfällen.

In der DE-A-37 35 061 ist ein Verfahren beschrieben worden, bei dem Abfälle mit organischen Anteilen statt mit Verbrennungsluft mit hochprozentigem Sauerstoff verbrannt werden. Unter Abfällen sind dort u.a. Hausmüll, Sonderabfälle und dergleichen erwähnt worden, aber auch Shredderschutt, auf den noch gesondert eingegangen wird.

Die Abfälle werden in einem geeigneten Ofen mit Sauerstoff verbrannt, die Abgase in einem Abhitzekessel abgekühlt und dann in einer geeigneten Gasreinigungsanlage von Schadstoffen weitgehend befreit. Bei diesem Verbrennungsvorgang werden vorhandene Kohlenstoffe und/oder kohlenstoffhaltige Stoffe hauptsächlich zu Kohlendioxid und Wasser verbrannt.

Da der Stickstoff, der beim Verbrennen mit Luft als Ballast vorhanden ist, fehlt, haben die Verbrennungsabgase nur geringe Stickstoff-Gehalte in Abhängigkeit vom Stickstoffgehalt in den zu verbrennenden Abfällen. Kohlendioxid ist ein unerwünschtes Verbrennungsprodukt, da es zum sogen. Treibhauseffekt beiträgt.

Weiter sind viele Verfahren bekannt, bei denen Kohlenoxide zu Kohlenwasserstoffen unterschiedlichster Zusammensetzung -unter Verwendung geeigneter Katalysatoren- hydriert werden. Hierzu seien erwähnt die Fischer-Tropsch-Benzinsynthese

$$n\ CO\ +\ 2nH_2\ \leftrightarrows\ n\ CH_2\ +\ n\ H_2O$$

oder die Methanol-Synthese.

$$CO\ +\ 2\ H_2\ \leftrightarrows\ CH_3OH$$

Auch Kohlenmonoxid und Wasserdampf lassen sich bei geeigneten Mischungsverhältnissen und bestimmten Katalysatoren in verschiedene Kohlenwasserstoffe umwandeln (H. Klöbel und Fr. Engelhardt, Angewandte Chemie 64, 1952, S. 54-58):

$$m\ CO\ +\ n\ H_2O\ \leftrightarrows\ o\ CH_2\ +\ p\ C_2H_5OH\ +\ q\ CO_2$$

Die Hydrierung von Kohlendioxid mit Wasserstoff ist ebenfalls möglich (EP-A-0079207):

$$m\ CO_2\ +\ n\ H_2\ \leftrightarrows\ o\ CH_4\ +\ p\ CH_3OH\ +\ q\ CO$$

Während in der Regel für die Synthese von Kohlenwasserstoffen eigens dafür hergestllte sogenannte Synthesegase verwendet wurden, aber auch schon Synthese mit Gichtgas und Wassergas durchgeführt wurden, kann der DE-A-35 25 479 entnommen werden, das aus der Verbrennung von Gasen entstandene $CO_2$ bei hoher Temperatur mit Methan und Wasserdampf in ein hauptsächlich aus CO und $H_2$ bestehendes Gas umzuwandeln, das als Synthesegas für verschiedenste Syntheseprodukte geeignet ist.

Die Hydrierung kohlenstoffhaltiger Abfälle ist bereits bekannt durch Kunststoff-Journal 12/87, S. 3.

Es sei nachfolgend nun noch auf den eingangs erwähnten Shredderschutt eingegangen.

Abfälle aus Kunsstoffen fallen in großer Menge beim Shreddern von Altauto-Karosserien an. Sie umfassen etwa 3/4 der sogenannten Leichtfraktion, wobei diese 25% des Gewichtes der Altautos ausmachen, d.h. sie sind in Anteilen von 12% bis 18% vom Autogewicht enthalten. Diese Abfälle werden durch Entnahme noch brauchbarer Teile bzw. von Großteilen vermindert. Es bleiben jedoch immer noch mindestens die Hälfte übrig, weil diese so fest mit der Karosserie verbunden sind, daß eine Entnahme nicht oder nur mit einem unzumutbaren Aufwand möglich ist. Diese Abfalle in der Leichtfraktion fallen als Schnitzel an und bestehen aus einem Gemisch der verschiedensten Kunststoffe, Textilien, Kautschuk und Holz. Sie sind daher nicht mehr wirtschaftlich zu trennen und z.B. direkt aus der Schmelze heraus wieder zu verwenden, so daß sie heute deponiert werden müssen. Darüberhinaus sind diese Abfälle durch Motoren- und Hydrauliköle so verschmutzt, daß sie auch nicht mehr verbrannt werden können, so daß sie als Sondermüll mit einem sehr hohen Kostenaufwand entsorgt werden müssen.

Dieses aus organischen Werkstoffabfällen bestehende Gemisch besitzt jedoch einen hohen Heizwert von ca. 12,5 MJ/kg, da es größenteils aus Polymeren besteht, die aus Erdöl hergestellt wurden. Eine Aufarbeitung derartiger Gemische über die Schmelze hat nicht zu brauchbaren und verkäuflichen Erzeugnissen geführt.

Es sind aber Verfahren vorgeschlagen worden, die eine Spaltung der höhermolekularen Wasserstoffverbindungen zu niedermolekularen Gasen und Ölen bewirken. Dies sind die Pyrolyse, die Hydrolyse und das Hydrierverfahren. Letzteres geht direkt zurück auf die Hydrierung von Kohle. Die Abfalle müssen gereinigt und zerkleinert werden, um dann mit Altölen zu einer Maische angeteigt, dem Hydrieren ausgesetzt zu werden. Die Hydrierung erfordert eine aufwendige Vorbereitung der Abfälle durch Handverlesen und Mahlen zu einem feinen Pulver.

Bei der Pyrolyse hat sich gezeigt, daß sich die Begleiter, wie Chlor und Schwefel, in Form unerwünschter, zum Teil hochtoxischer Verbindungen in den Pyrolyseölen ansammeln. Daher ist heute die Pyrolyse von Kunststoffabfällen nur mit chlorfreien Abfällen sinnvoll. Die Hydrolyse ist nur für einen Teil der Kunststoffe geeignet, nämlich für solche, die durch Polykondensation hergestellt wurden.

Ein Verfahren der eingangs beschriebenen Art ist auch noch bekannt geworden durch die US-A-3,984,288. Dort werden die Abfälle zunächst aufgeheizt und verschmolzen und sodann in diesem Zustand von einem Extruder in eine besondere und beheizte Kammer für die Zerlegung geführt. Diese Verfahrensweise erfordert einen hohen apparativen Aufwand und ist damit auch kostenungünstig. Dort wird lediglich zur Erleichterung der kontinuierlichen, gleichmäßigen Aufgabe und zum Herstellen einer für das Verfahren selbst noch ungenügend erwärmten Schmelze aus den Kunststoffabfällen und Förderung in eine Zersetzungsrohr genannte Pyrolysekammer ein Extruder verwendet. Ausdrücklich wird darauf hingewiesen, daß die Pyrolysereaktion erst im Zersetzungsrohr beginnen soll. Dieses Verfahren erleichtert die Pyrolyse zweifelsohne, ohne jedoch die Nachteile der Pyrolyse zu vermeiden. Außerdem ist durch die Behandlung im Zersetzungsrohr mit oder ohne Zuführung reaktiver Gase die Verweildauer der Abfälle in der Anlage sehr hoch und der Durchsatz niedrig.

Mit der FR-A-21 37 664 ist ein Verfahren sowie eine Anlage zur Herstellung brennbarer Gase aus Abfällen von hochpolymeren Kunststoffen, die synthetisch durch petrochemische Methoden gewonnen wurden, bekannt geworden. Es kann somit nur ein Teilsprektrum der anfallenden Kunststoffabfälle verwertet werden. Die Vergasung macht unerwünscht hohe Temperaturen notwendig und die Verweildauer der Kunststoffabfälle ist relativ hoch.

Ausgehend von diesem Stand der Technik liegt der Erfindung die Aufgabe zugrunde, ein Verfahren der eingangs beschriebenen Art vorzuschlagen, mit dem auf einfache und umweltschonende Weise Kunststoffabfälle verwertet werden können oder mit dem wertvolle Rohstoffe, Ersatzstoffe oder Energieträger gewonnen werden können oder mit dem deren einfache Gewinnung vorbereitet werden kann. Das Verfahren soll eine hohe Durchsatzleistung und eine kurze Verweildauer ermöglichen. Weiter soll eine Vorrichtung zur Durchführung des Verfahrens vorgeschlagen werden.

Hinsichtlich des Verfahrens ist diese Aufgabe, ausgehend von einem Verfahren der eingangs beschriebenen Art, dadurch gelöst, daß in einem Reaktionsraum die Abfälle auf mehr als 150° C aufgewärmt, unter Druck gesetzt und einer Scherung unterworfen, aufgeschmolzen und anschließend abgebaut werden zu niedermolekularen Wachsen, Ölen oder Gasen unter Zusatz von reaktiven Gasen wie Sauerstoff und/oder Wasserstoff und/oder Wasser und/oder Luft und/oder Wasserdampf und/oder Metalle oder Metallverbindungen. Hier sind die Nachteile und Schwierigkeiten der Pyrolyse, der Hydrolyse und des Hydrierverfahrens beseitigt. Es werden vielmehr die organischen Polymere zunächst zu niedermolekularen Poly- Oligo- und Monomeren abgebaut, so daß flüssige und/oder gasförmige Bestandteile entstehen, die dann leicht und beliebig weiter verarbeitet werden können. Dies alles wird durchgeführt in nur einem einzigen Reaktionsraum, der hierzu natürlich in geeigneter Weise gestaltet sein muß, wie dies den Vorrichtungsansprüchen entnommen werden kann. Die gleichzeitige zusätzliche Anwendung von Druck und Scherung erlaubt eine kurze Verweilzeit und einen hohen Durchsatz.

Hierdurch läßt sich außerdem die notwendige Erwärmung erzeugen oder mindestens einen Teil der erforderlichen Wärmemenge aufbringen. Die Abfälle werden hierdurch leicht in niedermolekulare Moleküle gespalten und hierdurch verflüssigt oder vergast.

Durch die zusätzliche Zuführung auch unterschiedlicher reaktiver Gase wie Sauerstoff oder Wasserstoff oder Wasserdampf einzeln oder gemeinsam gleichzeitig oder in ausgewählter Folge kann der Abbau der Polymere beschleunigt werden. Weiterhin können dem Gemisch aus Kunststoffen und reaktiven Gasen weitere Stoffe zugegeben werden, die katalytisch den Molekülabbau beschleunigen und zusätzlich oder alternativ die Rekombination der entstehenden Radikale verhindern. Diese katalytischen Stoffe können Metalle, Metallverbindungen, z.B. Metalloxide, sein.

Mit den hier vorgeschlagenen Maßnahmen werden die Makromoleküle der Kunststoffe in der Schmelze gespalten, d.h. verkürzt und dadurch bei geeignetem Druck und relativ niedriger Temperatur verflüssigt und evtl. auch ganz oder teilweise vergast. Soweit erforderlich kann die Schmelze gleichzeitig auch enthalogeniert werden.

Bei mechanisch verunreinigten Kunststoffen kann gleichzeitig mit der Verflüssigung der Kunststoffe in einer geeigneten Vorrichtung eine ausreichende Abtrennung von nicht verflüssigten bzw. nicht verflüssigbaren Bestandteilen erfolgen. In vielen gemischten Kunststoffabfällen müssen auch Anteile von nicht schmelzbaren Kunststoffen erwartet werden. Diese stören jedoch den Prozeß nicht, wenn mehr als die Hälfte Thermoplaste sind. Es ist dann allerdings erforderlich, die Scherung und ggfls. den Sauerstoffgehalt der zugeführten Gase zu erhöhen.

Das vorangehend beschriebene Verfahren beruht darauf, daß die kovalente Bindung der Kohlenstoff- bzw. Heteroatome der Hauptketten der Polymere um 400°C zunehmend labil wird. Diese für die Kunststoffe kennzeichnende Molekülbindung spaltet sich unter derartigen Bedingungen, kann jedoch, wenn keine Absättigung der entstehenden Radikale stattfindet, rekombinieren. Aus diesem Grund werden bereits der sich bildenden Schmelze Sauerstoff, evtl. Wasserstoff und Wasserdampf als reaktive Gase angeboten.

Dabei ist die Degradation der Polymermoleküle durch Sauerstoff der bei den meisten Polymeren am schnellsten wirkende Abbau-Prozeß.

Wasserdampf hat u.a. die spezielle Aufgabe, die z.B. im Shreddermüll vorhandenen Kunststoffe, die durch Polykondensation hergestellt wurden, abzubauen. Ergänzend ist es auch sinnvoll, den Abfällen Wasser zuzugeben. Hierbei kann das Wasser auch als Anfeuchtung des Aufgabegutes eingebracht werden. Dieses Wasser wird dann während des Verfahrens zu Wasserdampf, so daß der gesonderte Eintrag von Wasserdampf entfallen kann. Der Abbau der Polymere kann noch verstärkt werden, wenn man den Abfällen z.B. durch Auftrommeln vor der Einfüllung oder durch Eindüsen am Anfang des Schmelzzylinders Metalle, Metallverbindungen, z.B. Metalloxyde, zugibt, die katalytisch wirken. So wirken z.B. eisenhaltige Verbindungen katalytisch bei der Spaltung von Polyvinylchlorid (PVC) und schwermetallhaltige Verbindungen, insbesondere Kupfer, dementsprechend auf Polypropylen und andere Polyolefine.

Es ist je nach Gestaltung der zur Durchführung des Verfahrens geeigneten Vorrichtung möglich, die organischen Abfälle kontinuierlich oder chargenweise zu behandeln. Besonders zweckmäßig ist die Verwendung einer Schneckenmaschine als Reaktionsraum, weil in ihr alle Reaktionsabläufe stattfinden können und sie selbst hierbei Scherung und Druck erzeugen kann, so daß gesonderte Einrichtungen für den Transport einerseits und die weitere Behandlung andererseits nicht erforderlich werden. Es ist hierbei zweckmäßig, während der Behandlung mindestens den Wasserstoffanteil in den flüssigen und/oder gasförmigen Bestandteilen zu kontrollieren und durch geeignete Dosierung der organischen Abfälle diesen in gewünschter Weise zu beeinflussen. Hierdurch kann die Zusammensetzung der sich ergebenden flüssigen oder gasförmigen Bestandteile gezielt gesteuert werden. Vor der Weiterverarbeitung oder Weiterverwertung dieser Produkte werden zweckmäßigerweise mechanische Verunreinigungen aus der Schmelze entfernt.

Die durch den Makromolekülabbau entstandenen Komponenten sind von solcher Konsistenz, daß sie problemlos mit Hilfe bekannter Vorrichtungen in Behälter, Brennräume oder Reaktoren usw., die ebenfalls für sich bereits bekannt sind, abgegeben oder eingedüst werden können. Dies kann vorteilhafterweise auch zu dem Zweck geschehen, hierdurch in bekannten Anlagen mindestens teilweise bisher dort verwendete Stoffe z.B. zur Erzeugung von Synthesegas oder anderen verwertbaren Gasen oder auch als Reduktionsmittel zu ersetzen. Erfindungsgemäß ist es aber auch möglich, daß vorwiegend aus PVC bestehende Kunststoffabfälle direkt zu Granalien mit dem oben genannten Verfahren umgewandelt werden und so für metallurgische Zwecke weiterverwendet werden.

Hier sei bspw. auf die Erzeugung von Titantetrachlorid hingewiesen. Üblicherweise wird $TiO_2$ oder Rutil mit Koks und Teer gemischt, vergast und kalziniert. Anschließend wird z.B. im Schachtofen oder Wirbelbett bei 800°C chloriert. Es kann aber mindestens ein Teil des gen. Koks und Teers z.B. durch die Kohlenwasserstoffe von PVC-Abfällen ersetzt und die Chlorierung wie sonst üblich -unter vollständigem oder teilweisem Fortfall des sonst üblichen Chlorgases- bei erhöhter Temperatur durchgeführt werden. Es kann eine sich bei der Trennung ergebende PVC-Fraktion geschnitzelt oder zu Granulat oder Pulver verabeitet werden und metallhaltigen und/oder metallverbindungshaltigen Stoffen zum mindestens teilweisen Ersatz von kohlenstoff- und chlorhaltigen Stoffen zugemischt und dann in an sich bekannten metallurgischen Verfahren umgesetzt werden.

Das Aufgabegut soll aus weitgehend sauberen Kunststoffen bestehen, wozu diese sinnvollerweise von mitgeführten Fremdstoffen weitgehend getrennt und sodann grob zerkleinert werden. Hierbei erfolgt vorteilhafterweise eine Zerkleinerung auf weniger als 100 cm².

Bei der Trennung ist es besonders vorteilhaft, wenn eine Trennung vorgenommen wird in die Fraktionen Nichtkunststoffe, Kunststoffe mit spezifischem Gewicht über ca. 1 g/cm³ und solcher unter ca. 1 g/cm³. Auf diese Art und Weise werden einerseits die Nichtkunststoffe von den Kunststoffen getrennt und es wird durch die Auftrennung der Kunststoffe nach spezifischem Gewicht auch möglich, zwischen PVC und anderen Kunststoffen eine weitere Auftrennung vorzunehmen. Diese so getrennten Fraktionen können dann vorteilhafterweise getrennten Behandlungen, die die speziellen Eigenschaften der getrennten Kunststoffe berücksichtigen, zugeführt werden. Insbesondere die Fraktion mit einem spez. Gewicht unter 1 g/cm³ hat den besonderen Vorteil, daß sie sich leicht von Schaumstoffen trennen läßt und dann nur noch aus ungefüllten Kunststoffen polyolefinsicher Polymere besteht, die so gut wie keine toxischen Anteile besitzen, so daß sie zu einem als Reduktionsmittel verwendbaren wasserstoffreichen Gas oder Öl umgewandelt werden können.

Die bisher beschriebenen Behandlungen der Kunststoffe machen es möglich, auf sehr einfache Weise über einen Chlorinhalt und/oder einen Kohlenwasserstoffinhalt der Abfälle wieder zu verfügen. Eine mögliche Verwendung besteht darin, die gen. Inhalte bei metallurgischen Reaktionen einzusetzen.

Es wird somit einerseits vorgeschlagen, die genannten Abfälle wieder zu zerlegen und es wird weiter vorgeschlagen, daß die Zerlegung nicht unbedingt unter dem Gesichtspunkt erfolgt, Ausgangsstoffe für die Erzeugung von Kunststoff zu gewinnen, sondern um vielmehr Ausgangsstoffe, die in anderen Prozessen, z.B. in metallurgischen Reaktionen, für die Energieerzeugung u.a. verwendet werden, zu gewinnen.

Es ist auch möglich, eine Mischung aus PVC-Abfällen, metall- und/oder metallverbindungshaltigen Stoffen und sonstigen gewünschten weiteren Zuschlagsstoffen zu erwärmen, wodurch eine Plastifizierung der PVC-Abfälle erreicht wird, so daß anschließend aus der Gesamtmischung Pellets oder Ähnliches für eine spätere Verwendung erzeugt wird.

Es ist auch möglich, die PVC-Fraktion in flüssiger Form oder in pulverisierter Form mittels Düsenlanzen in flüssiges Metallbad einzubringen und dort dann zur Entfernung von Verunreinigungen zu verwenden. Zur Reaktion mit metall- oder metallverbindungshaltigen Stoffen wird die PVC-Fraktion vorzugsweise in Reaktionsräume bei erhöhter Temperatur eingebracht. Hierbei kann die PVC-Fraktion auch zuvor vergast werden. Auch in vergaster Form ist es möglich, die PVC-Fraktion mit Hilfe der Düsenlanzen in ein flüssiges Metallbad einzubringen.

Überraschenderweise hat sich nun ergeben, daß es möglich ist, auch bei größeren Anteilen von PVC in den Kunststoffabfallgemischen diese zu enthalogenieren, indem zur Abspaltung des Chlors bzw. anderer Halogene zusammen mit gegebenenfalls Wasserstoff die Halogene über einen Zeitraum von 10 Sekunden bis 10 Minuten bei einer Temperatur von 150° C bis 350°C behandelt werden. Die abgespaltenen Halogene können dann durch Kondensation oder durch Auswaschen der bei der Wärmebehandlung entstehenden Gase zurückgewonnen werden. Sie können auch direkt mit anderen Stoffen zur Reaktion gebracht werden. Die im Laufe der Wärmebehandlung abgespaltenen Schadgase, soweit solche entstehen, können abgesaugt und einer Naßwäsche zur Abscheidung zugeführt werden. In einer solchen Naßwäsche wird vorzugsweise eine wässerige Lösung von Alkali- und/oder Erdalkaliverbindungen verwendet.

Besonders vorteilhaft ist auch, daß die verflüssigten und/oder vergasten Bestandteile einer Verbrennung zugeführt werden können, wobei die bei der Verbrennung anfallende Wärme an die Umwelt abgegeben oder in weiteren Einrichtungen genutzt werden kann.

Eine weitere erfindungsgemäße Möglichkeit zur Verwertung der gen. organischen Abfälle besteht darin, einen Teil der Abfälle mit Sauerstoff zu verbrennen, den anderen Teil mit dem beschriebenen Verfahren zu verflüssigen oder zu vergasen und die flüssigen und/oder gasförmigen Bestandteile dieses anderen Teiles in den Rauchgasstrom der Verbrennung des ersten Teiles einzudüsen und dadurch ein für eine Synthese geeignetes Gas oder ein Synthesegas selbst zu erzeugen. Insbesondere soll hier der Teil mit Sauerstoff verbrannt werden, der toxische Stoffe enthält oder nicht polyolefiner Natur ist. Hierbei soll der Sauerstoffanteil des Verbrennungsmediums über 50% betragen.

Auch können jeweils Füllstoffe und/oder Treibgase eingearbeitet werden.

Es ist auch möglich, die durch die gen. Eindüsung hergestellte Gasmischung durch Wahl geeigneter Katalysatoren und von Druck und Temperatur in Synthesegas, Brenngas, Reduktionsgas oder andere verwertbare Gase umzuwandeln. Dies kann vorteilhafterweise dadurch geschehen, daß die durch die Eindüsung hergestellte Gasmischung in bestehende Anlagen zur Herstellung solcher Gase zum vollständigen oder teilweisen Ersatz der bisher dort verwendeten Stoffe oder auch zusätzlich eingebracht wird.

Besonders geeignet für die Durchführung des erfindungsgemäßen Verfahrens ist eine Anlage mit einer oder mehreren Schneckenmaschinen, bei welchen die Reaktionsräume von den Schneckenmaschinen selbst gebildet werden.Diese Schneckenmaschinen sind beheizbar ausgebildet sowie mit Entgasungsöffnungen und Eindüsungsöffnungen ausgerüstet. Weiterhin können sie eine mit der Schneckenmaschine verbundene Einrichtung besitzen zur Weiterbehandlung mindestens eines Teiles der von der Schneckenmaschine erzeugten Produkte. Natürlich können auch mehrere Schneckenmaschinen und Schneckenmaschinen gleicher oder unterschiedlicher Bauarten miteinander verbunden und/oder angewendet werden.

Vorteilhafterweise wird der Schneckenmaschine oder den Schneckenmaschinen eine Sortiereinrichtung und eine Zerkleinerungseinrichtung und eine Stopfvorrichtung vorgeordnet. Mit der Zerkleinerungseinrichtung können die Abfallstücke auf eine für das Extrudieren geeignete Korngröße zerkleinert werden. Die Sortiereinrichtung kann je nach Einsatzzweck sowohl vor der Zerkleinerungseinrichtung als auch zwischen Zerkleinerungseinrichtung und Schneckenmaschine geschaltet sein.

In der Einrichtung zur Weiterbehandlung kann auch eine Verbrennungsanlage für die verflüssigten und/oder vergasten Abfälle enthalten sein. Bei geeigneter Verbrennung können die Abfälle umweltfreundlich beseitigt und die gewonnene Energie für weitere Prozesse verwendet werden. Die umweltfreundliche Beseitigung besteht bei der Verbrennung insbesondere darin, mit Hilfe der Rauchgase und in die Rauchgase eingebrachter weiterer Bestandteile weitere Gase gewünschter Zusammensetzung zu erzeugen. Auf diese Art und Weise gehen die entstehenden Verbrennungsgase nicht in die Umwelt, sondern werden zur Erzeugung verwertbarer Gase benutzt. Soweit bei dieser Verbrennung Überschußwärme entsteht, ist es sinnvoll, diese in einer Wärmekraftmaschine zu benutzen, die vorzugsweise zu der bereits gen. Einrichtung zur Weiterbehandlung gehört. Zusätzlich oder alternativ kann jedoch auch Überschußwärme über einen Wärmetauscher zurückgewonnen und weiter verwertet werden. Auch dieser Wärmetauscher ist dann vorteilhafterweise ein Bestandteil der Einrichtung zur Weiterbehandlung.

Um auch mit evtl. Restgasen aus der Verbrennung keine Umweltbelastung zu erzeugen, ist es weiterhin vorteilhaft, wenn die Einrichtung zur Weiterbehandlung eine geeignete Gasreinigungsanlage aufweist.

Wegen der unterschiedlichen Behandlungsmöglichkeiten ist es weiter von besonderem Vorteil, wenn die Einrichtung zur Weiterbehandlung eine Mischanlage aufweist zur Beimischung organischer Stoffe in die Schmelze wie z.B. Holz, Stroh, Textilien oder Papier. Um bestimmte Gase für eine gewünschte Weiterverwendung oder zur Unschädlichmachung zur Verfügung zu stellen, ist es auch sinnvoll, wenn die erfindungsgemäße Anlage einen Separator zur Abtrennung gewünschter Gase aus dem Gasgemisch aufweist.

Um in weitgehend automatischem Betrieb arbeiten zu können, wird erfindungsgemäß noch vorgeschlagen, daß die Anlage eine Aufgabeeinrichtung sowie Sensoren zur Ermittlung gewünschter Zustandsdaten der End- oder Zwischenprodukte enthält und daß weiter Steuer- oder Regeleinrichtungen für die Aufgabeeinrichtung vorgesehen sind, die diese in Abhängigkeit von Meßergebnissen der Sensoren steuern oder regeln. Hierdurch kann eine gewünschte Zusammensetzung der Schmelze und/oder der entstehenden Gase überwacht und durch entsprechende Beimischung geeigneter Kunststoffabfälle beeinflußt werden.

Es soll nun nachfolgend beispielhaft auf einige der sich durch das erfindungsgemäße Verfahren ergebenden Möglichkeiten eingegangen werden. Nach dem erfindungsgemäßen Verfahren werden die organischen Polymere zunächst zu niedermolekularen Kohlenwasserstoffen, die auch noch Polymere sein können, abgebaut. Diese können dann z.B. bei sehr hohen Temperaturen zu einem Synthesegas umgewandelt werden, das für die Wiedergewinnung in Form beliebiger Kohlenwasserstoffverbindungen einsetzbar ist. Dieser Weg ist besonders dann vorteilhaft, wenn in den zu verarbeitenden Abfällen giftige Begleitstoffe wie z.B. PCB- enthaltende Öle, Dioxine und Furane, verschiedene Aromatenverbindungen usw. vorliegen. Solche Kohlenwasserstoffverbindungen sind sehr stabil und zersetzen sich erst bei Temperaturen deutlich über 1.200° C. Zudem werden einige Kunststoffbegleiter für das Entstehen hochgiftiger Dioxine direkt verantwortlich gemacht, wenn die Verbrennungs- bzw. Prozeßtemperaturen zu niedrig bleiben. Soweit es also hier um eine Verbrennung geht, sollen die Temperaturen im Reaktor 1.200° C und mehr betragen.

Die entstehenden Synthesegase sind die direkte Basis dür die Herstellung von Kohlenwasserstoffen. Im Stand der Technik werden diese fast ausschließlich aus Erdgas und Erdoel hergestellt. Sie werden jedoch auch aus Kohle oder anderen Kohlenstoffverbindungen hergestellt. Bisher wurde also für die Gewinnung von Synthesegas Erdgas, Erdoel und Kohle eingesetzt. Nach dem erfindungsgemäßen Verfahren werden jedoch anstelle der bisher üblichen Rohstoffe Kunststoffabfälle eingesetzt. Dabei kann es sich um saubere Kunststoffabfälle, z.B. aus der Kunststoffproduktion, oder aufbereitete Abfälle aus anderen Quellen handeln. Aber auch der Einsatz von verunreinigten Kunststoffabfällen ist möglich. So kann z.B. die Leichtfraktion, die beim Shreddern von Automobilen anfällt, der sogen. Shreddermüll, eingesetzt werden, wobei es natürlich zweckmäßig ist, zuvor die nichtpolymeren Bestandteile - in erster Linie Mineralien, wie Glasbruch und Steine- auszusieben. Ein weiterer Unterschied zu bekannten Prozessen besteht darin, daß das aufgegebene Material durch einfache Erwärmung ohne Luftabschluß aufgeschmolzen wird. Hierbei können die Makromoleküle der Kunststoffe zusätzlich durch Behandlung mit reaktiven Gasen, vorzugsweis mit Sauerstoff aber auch mit Wasserstoff und Wasserdampf jeweils allein oder in Kombination, gleichzeitig oder nachfolgend mit dem Schmelzen aufgebrochen, verkürzt und dadurch bei geeignetem Druck und Temperatur so weit verflüssigt werden, daß sie mit bekannten Düsen oder Brennern oder ähnlichen geeigneten Vorrichtungen in die Reaktoren zur Erzeugung des gewünschten Synthesegases oder von Gasen für andere Verwendungszwecke eingedüst werden können. Hierzu kann man wie folgt vorgehen:

Die auf ca. Handtellergröße zerkleinerten Kunststoffteile, die z.B. aus einem Shredder für Altautos stammen können, werden in dem Maße, wie sie mit nicht termoplastischen Kunststoffanteilen versetzt sind, auf Anlagen mit höherer Scherung und gleichzeitig höherem Sauerstoffgehalt behandelt.

Die vorbereiteten Abfälle werden aufgeschmolzen.

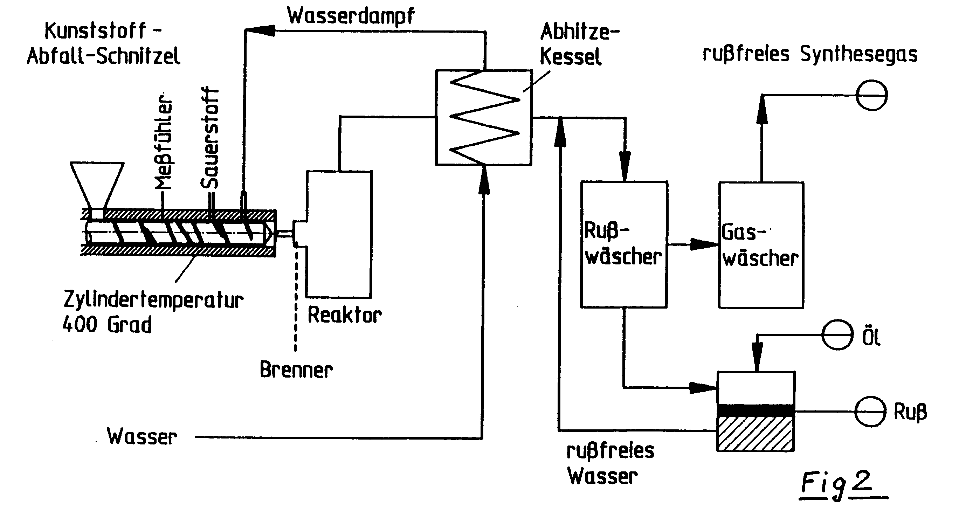

Hierzu wird mit einem Schnecken-Extruder gearbeitet (s. Fig. 2), wie z.B. einem gleichläufigen Schnecken-Kneter. Dabei können die aufgegebenen Kunststoffschnitzel bereits sehr frühzeitig, d.h. also im Aufgabetrichter, mit den den gezielten Abbau der Polymermoleküle einleitenden Reaktionsstoffen zusammengebracht werden, wozu der Trichter mit diesem Gas oder Gasgemisch geflutet wird. Um den Einzug der Kunststoffschnitzel zu erleichtern, können Stopfvorrichtungen angeordnet werden.

Die Schnecken, die mit einer oder mehreren Knet-, Scher- und Staustufen versehen sein können, haben die Aufgabe, der kontinuierlichen Förderung des Aufgabegutes, des Schmelzens und Abbauens unter der unterstützenden Wirkung der Scherung, mit deren Hilfe die Molekülketten mechanisch zerrissen werden und der evtl. aufgegebenen Reaktionsmittel, des Aufbaus eines für das Eindüsen ausreichenden Druckes, verbunden mit dem Einmischen der Reaktionsstoffe und ggfls. des Verdüsungstreibmittels.

Das aufgegebene Polymermaterial wird in der Schnecke bis ca. 400° C oder sogar höher aufgeheizt. Unter dem Einfluß von hohen Temperaturen, Scherung, Sauerstoff, Wasserstoff, Luft, Wasser und evtl. anderer Zusätze werden die Moleküle gebrochen und abgesättigt, so daß Dank der nun kurzen Moleküle eine dünnflüssige Schmelze entsteht. Im letzten Drittel der Schnecke kann die so vorbereitete Schmelze in eine auf der Schnecke befindliche, durchgeeignete Schneckenelementegebildete Dekompressionsstufe fließen, in der die zweckmäßigerweise aufgeheizten Reaktionsgase eingedüst werden. In der letzten Zone der Schnecken, die als Mischzone ausgebildet ist, werden diese Reaktionsstoffe in die Schmelze gleichmäßig eingearbeitet und das Gemisch auf 20 - 100 bar verdichtet. Es ist aber auch eine kaskadenförmige Anordnung von mehreren Extrudern möglich, um den hier genannten Zweck zu erfüllen.

Über eine Lochplatte, durch einen rotierenden Teller oder eine andere Art einer geeigneten Vorrichtung kann die Schmelze dann in den Reaktionsraum eingebracht und zu feinen Tröpfchen verdüst werden. Insbesondere über eine Lochscheibe kann die Schmelze in dünne Stränge zerteilt werden, so daß die hochgespannten Gase in der Schmelze diese in feine Tröpfchen zerlegen, sobald sie in den unter niedrigeren Drücken stehenden Reaktor eintreten. Es können jedoch auch andere bekannte Düsen oder Brenner benützt werden, um den verflüssigten Kunststoff in den Reaktor einzudüsen.

Die eingedüsten Schmelzetropfen sollen teilweise verbrennen, damit die notwendigen hohen Temperaturen von mindestens ca. 1.200° C erhalten werden. Somit wird ein Teil der eingedüsten Polymerschmelze als Brennstoff benützt; der Rest wird zu dem gewünschten Synthesegas umgewandelt.

Es ist, neben der besonders hohen Temperatur im Reaktor, welche der Zerstörung aller gefährlichen Kohlenwasserstoffe dient, von besonderer Bedeutung, die Polymermoleküle bereits während der Behandlung im Extruder weitgehend durch die Beladung mit Sauerstoff, Wasserstoff oder Wasserdampf, die gen. Stoffe auch in Kombination, abzubauen, damit die Schmelze bereits bevor sie in die Mischzone am Ende der Schnecke eintritt, möglichst dünnflüssig ist, so daß sowohl die Einmischung der Reaktionsstoffe vereinfacht wird, als daß sie auch beim Austritt in den Niederdruckraum, den der Reaktor darstellt, leicht in einfache Tröpfchen zerrissen werden kann. Der frühzeitige Kontakt mit Sauerstoff und evtl. Wasserstoff hat weiterhin die wichtige Aufgabe, eine Rekombination entstandener Polymerbruchstücke und Radikale dadurch zu verhindern, daß stattdessen die Radikale und freien Valenzen der Molekülbruchstellen mit den Atomen der reaktiven Gase abgesättigt werden.

Es kann sich für den laufenden Betrieb im Hinblick auf gleichmäßige Zusammensetzung des Synthesegases als zweckmäßig erweisen, die Schmelze stetig im Hinblick auf das Verhältnis Kohlenstoff zu Wasserstoff, d.h. den Wasserstoffanteil, zu kontrollieren und automatisch diesen bzw. dieses dem Kunststoffangebot anzupassen. Der diese Daten ermittelnde Sensor wird zweckmäßigerweise in einem Bypaß montiert und besteht z.B. aus einem Infrarotdetektor, der die kritischen Moleküle detektiert. Diese Kontrolle eröffnet gleichzeitig die Möglichkeit, über einen geeigneten Regler stets auch eine bestimmte Menge eines unerwünschte Begleiter absorbierenden Chemikals oder andere Komponeten zusätzlich geregelt zugeben zu können.

Enthalten die zu verabeitenden Kunststoffabfälle mechanische Verunreinigungen, so wird der Extruder mit einer Vorrichtung ausgerüstet, wie sie in Form von Schmelzefiltern in der Praxis bekannt sind, um eine Trennung der verflüssigten Kunststoffe von den Feststoffen zu bewirken. Die weitere Behandlung des in den Reaktor eingedüsten, zerlegten und verflüssigten Kunststoffes erfolgt nun in bekannter Weise.

Figur 2 zeigt hierzu schematisch die Anordung einer geeigneten Anlage und den Verfahrensablauf. Die Figur 2 ist aus sich heraus verständlich und bedarf keiner ergänzenden Kommentierung.

Verfahrensbeispiel

Der nachstehend beschriebene Versuch gibt beispielhaft einen möglichen Verfahrensgang an.

Die von nichtorganischen Abfällen durch Sieben grob gereinigte Leichtfraktion des Shreddermülls stammte von einer Automobil-Shredderanlage aus einer Verarbeitung von, wie bereits gesagt, 106 PKW.

Die nachfolgende Tabelle 1 gibt Auskunft über die Herkunft des Shredderschrottes.

| Typ | Anzahl | Anteil % |
|---|---|---|
| VW/Audi | 33 | 31 |
| Opel | 23 | 22 |
| Daimler Benz | 11 | 10 |
| Ford | 9 | 8,5 |
| Renault/Peugeot/Citroen | 15 | 14 |
| Fiat | 9 | 8 |
| BMW | 3 | 3 |
| Mazda/Honda | 2 | 2 |
| Ford USA | 1 | 1 |
| | 106 | 100 |

Tabelle 1

Die polymeren Abfälle waren dort durch Windsichtung hinter der Hammermühle gewonnen worden. Sie bestehen aus den verschiedensten Kunststoffen (vgl. Tabelle 2).

| Materialbezeichnung | Kurzzeichen | Gewichtsanteil der Karosserie % |
|---|---|---|
| Polyurethan | PUR | 42 |
| Polypropylen | PP | 24,5 |
| Polyäthylen | PE | 11,3 |
| Acrylnitril/Butadien-Styrol-Copolymer | ABS | 11,0 |
| Polyvinylchlorid | PVC | 6,0 |
| Ungesättigter Polyester | UP-GV | 2,5 |
| Polyphenylenoxid modif. | PPO | 2,1 |
| Polyamid | PA | 0,4 |
| Polyacetal | POM | 0,3 |
| | | 100, C |

Tabelle 2: Gewichtsanteile der Kunststoffe in der Karosserie Typ PORSCHE 928 ohne Elastomere, Textilien und Lacke.

Bei den Polymerabfällen handelt es sich bevorzugt um chipartige Bruchstücke von Kunststoffteilen. Da deren Durchmesser für die in den Versuchen verwendete Versuchs-Schneckenmaschine zu groß waren, wurden sie auf einem Granulator zu Bruchgranulat von weniger als 3 mm Durchmesser zusätzlich zerkleinert.

Der Extruder - ein Werner und Pfleiderer ZSK- Doppelschnecken-Laborkneter ZSK 30 mit einem Schneckendurchmesser von 30 mm- war mit einem Trichter ausgerüstet, aus dem die Bruchstücke freifließend von den Schnecken eingezogen wurden. Manuelle Hilfe war nicht notwendig. Der Trichter wurde mit Sauerstoff geflutet.

Der Extruder war mit Steckschnecken von 36 x D Länge augerüstet. Diese waren über die ersten 10 x D mit Förderelementen bestückt. Diese Förderzone wurde abgeschlossen durch 2 Scherelemente über 2 x D, gefolgt von zwei weiteren Förder-Knet-Zonen, bestehend aus je 2 x D Förder- und 1 x D Knetelement, darauf folgte eine 1 x D lange Radialdrossel. Hinter der Radialdrossel waren wiederum 5 x D Förderelemente mit doppelter Gangsteigung angeordnet. Da in dieser Zone ein niedriger Druck herrschte, wurden hier auch die Eindüsungen von Sauerstoff und Wasserdampf vorgenommen. Die restlichen 11 x D der Schnecke wurde mit Förderelementen mit einfacher Gangsteigung und Mischelementen bestückt, um hierdruch den erforderlichen Druck aufbauen und die Reaktionsgase in der Schmelze verteilen zu können. Der Zylinder der Schnecke war mit einer Lochplatte abgeschlossen, die mit Bohrungen von 2 mm Durchmesser versehen waren. Es wurde eine normale Siebplatte mit drei feinmaschigen Siebgeweben vorgeschaltet, vorzugsweise um einen Druckaufbau in der Schmelze zu bewirken. Die Lochplatte mündete in den Reaktorraum.

Der Extruderzylinder wurde in der ersten Hälfte ansteigend und in der zweiten Hälfte auf 420° C aufgeheizt. Der Durchsatz betrug bei 500 Umdrehungen je Minute bis zu 60 Kg/h. In die Schmelze wurden bei 20 x D in der Dekompressionszone vor der Mischzone auf 250° C vorgewärmter Sauerstoff in einer Menge von bis zu 50 kg/h und Heißdampf eingepresst.

Der Extruder war an eine auf Umgebungsdruck eingestellte Brennkammer als Reaktor so angeflanscht, daß die Lochplatte in den Reaktionsraum hineinreichte. Der Reaktor konnte durch elektrische Heizbänder für den Anfahrvorgang aufgeheizt werden; zudem war ein Gasbrenner angeschlossen, der zur Zündung des aus dem Extruder eintretenden Gas-Kunststoff-Tröpfchen-Gemisches diente.

Für die Messung der Abgase wurden diese in Beuteln aufgefangen und mit bekannten Methoden analysiert. Je nach Temperatur des Reaktorraumes wurde ein Gasgemisch bestehend aus niedermolekularen Kohlenwasserstoffen, CO, Wasserstoff und bis zu 10% Kohlendioxyd erhalten. Die Gaszusammensetzung konnte durch die Variation der in der Mischkammer zugegebenen Mengen an Sauerstoff und Wasserdampf weitgehend variiert werden. Bei der Zugabe dieser Gase wurde deren Temperatur mit 250° C konstant gehalten.

Für den Fall, daß bei gewissen Kunststoffen die Vergasung nach dem Extruder noch nicht ausreichend ist, werden die noch flüssigen Kunststoffe nicht direkt in einen Brennraum oder Reaktor eingedüst, sondern in eine vorgeschaltete Vergasungskammer, die beheizt ist und in der die Vergasung erfolgt.

Mit den verflüssigten Kunststoffen können aber nicht nur, wie bisher dargelegt, Synthesegas oder Brenngas hergestellt werden, sondern z.B. auch Reduktionsgas, wie es z.B. für die Herstellung von Eisenschwamm geeignet ist.

Bei all diesen Verwendungen ist es sinnvoll, die auf die beschriebene Art verflüssigten oder vergasten Kunststoffe nicht nur ausschließlich in extra dafür errichteten Anlagen zu verwenden. Es kann vielmehr auch eine Verwendung in bestehenden Anlagen erfolgen zum teilweisen oder völligen Ersatz der dort bisher verwendeten Reaktionsstoffe. Sie können jedoch auch zusätzlich zu diesen eingebracht werden.

Die verflüssigten Kunststoffe können auch, wie bereits angedeutet, zu Granalien oder durch Versprühen zu Pulver geformt werden. Solche Granalien oder solche Pulver sind leicht dosierfähige Vorstoffe zur Erzeugung von Synthesegas und/oder andere verwertbare Kohlenwasserstoffe und Gase. Sie können ebenso als Brennstoffe oder Kraftstoffe, wie als Reduktionsmittel verwendet werden. Gerade hierfür sind diese Granalien besonders geeignet, weil sie rückstandsfrei bei erhöhten Temperaturen vergasen. Bei einer Körnung von 2 mm Durchmesser erfolgt die Vergasung bei 1000° C in weniger als 0,5 Sek.

Falls der anfallende Abfallkunststoff eine PVC-Fraktion enthält treten im Stand der Technik besondere Schwierigkeiten auf. PVC in Gemischen gilt als einer der am wenigsten recyclingfreudigen Kunststoffe. Bei der herkömmlichen Entsorgung solcher Gemische macht dessen Chlorgehalt sowie die entstehenden sonstigen toxischen Abgaskomponenten besondere Schwierigkeiten. Diese wiegen umso schwerer, als PVC ein außerordentlich weit verbreiteter Massenkunststoff ist, auf den kaum verzichtet werden kann und der daher auch in allen Abfallkunststoffgemischen auftritt. Darüberhinaus traten in Verbrennungsanlagen, und hier hauptsächlich in den Abhitzekesseln, starke Korrosionsschäden durch Salzsäure auf.

EP 0 531 371 B1

Das erfindungsgemäße Verfahren bietet eine Möglichkeit, auch PVC haltige Kunststoffabfälle zu entchloren, wobei bei unseren Versuchen Gehalte von weniger als 0,3% Chlor in den erzeugten Wachsen oder Ölen verblieben. Derartige Öle oder Wachse aber wären als Heizöle zugelassen.

Es ist bekannt, daß PVC bereits bei relativ niedrigen Temperaturen von ca. 100° C beginnt, Chlor und Wasserstoff abzuspalten, so daß eine Salzsäure in statu nascendi entsteht. Überraschenderweise hat sich gezeigt, daß trotz der sogen. Stabilisierung des PVC oberhalb 200° C - und insbesondere 250° C- eine sehr schnelle und vollständige Abspaltung des Chlors stattfindet. Diese ist praktisch bei 300° C und üblichen Verweilzeiten im Bereich einiger Minuten abgeschlossen. Es zeigt sich ferner, wenn diese Wärmebehandlung unter weitgehendem Luftabschluß stattfindet, daß nur diese Spaltung an den Polymeren stattfindet, so daß Salzsäure praktisch alleine in den entstehenden Gasen vertreten ist. Zudem nimmt die Spaltung oberhalb von 200° C größere Geschwindigkeit an, so daß es sich erübrigt, die PVC-Abfälle abzutrennen. Als Reste bleiben Diene übrig, die in der übrigen Schmelze gelöst werden und bei höheren Temperaturen dann vollends zersetzt und abgebaut werden.

Zur Verwertung von PVC-Fraktionen enthaltenden Abfällen oder von reinen PVC-Abfällen kann aber auch wie folgt vorgegangen werden: PVC besitzt ein für Kunststoffe relativ großes spezifisches Gewicht und kann somit leicht z.B. durch Flotation von anderen Kunststoffabfällen abgetrennt werden, so daß ein ausschließlich aus PVC bestehender Abfallstoff vorliegt zur Weiterverwertung. Zunächst kann, falls hierzu Bedarf besteht, durch Waschen das Produkt von evtl. anhaftendem Schmutz befreit werden. Eine Zerkleinerung muß nur insoweit vorgenommen werden, wie sie für die Aufbereitung für den Prozeß notwendig ist. Der aufbereitete PVC-Abfall kann nun in folgender Weise für durchzuführende Reaktionen weiter verwendet werden:

1. Der PVC-Abfall wird kalt gemahlen oder in sonstiger Weise stark zerkleinert, so daß ein granulatähnliches Produkt entsteht. Dieses granulatähnliche Produkt kann nun Metall und/oder Metallverbindungen enthaltenden Stoffen zusätzlich zu den sonst üblichen Zusatzstoffen oder auch allein zugemischt und im Verlauf üblicher Prozesse zur Reaktion gebracht werden. Das bei der Zersetzung mit steigender Temperatur frei werdende Chlor reagiert wie das sonst in Form von anderen chlorhaltigen Stoffen zugesetzte Chlor oder wie gasförmiges $Cl_2$. Hier dienen gleichzeitig Kohlenwasserstoffe des PVC als Reduktionsmittel, so daß diese den sonst üblicherweise zugesetzten Kohlenstoff ganz oder teilweise ersetzen können. Die Zugabe des granulatähnlichen Produktes erfolgt durch einfaches Zumischen oder aber die Mischung von PVC und metall- und/oder metallverbindungshaltigen Stoffen wird erwärmt, so daß durch das frühzeitige Erweichen der PVC Pellets oder ähnliches erzeugt werden können. Als Beispiel für die vorangegangene Behandlung sei die eingangs bereits beschriebene Erzeugung von Titantetrachlorid erwähnt.

2. Zur Raffination flüssiger Metalle werden PVC-Abfälle z.B. als Schnitzel oder als granulatähnliches Produkt mit geeigneten Hilfsmitteln in das flüssige Metall gepreßt, wobei durch das freigesetzte Chlor bestimmte Metalle bevorzugt gebunden und als Salz aus der Metallschmelze entfernt werden können. Hier sei als Beispiel auf die Zinnentfernung aus einer Bleischmelze hingewiesen.

3. PVC-Abfälle können auch ohne vorherige Zerkleinerung in einer geeigneten Vorrichtung, z. B. einem Drehrohrofen, vergast werden. Das entstehende Gas wird in einen Reaktionsraum eingeleitet, wo es mit den metall- oder metallverbindungshaltigen Stoffen zur Reaktion gebracht wird.

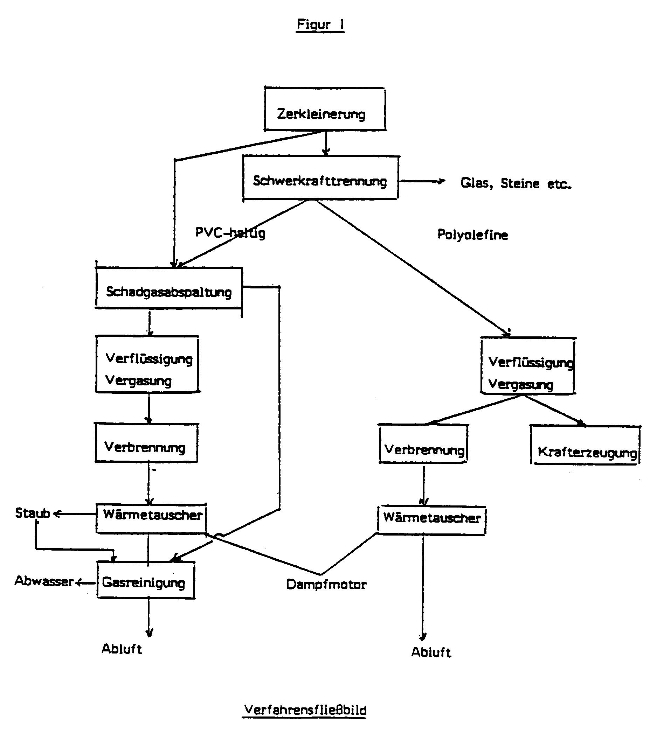

Wie Figur 1 zeigt, eignet sich das erfindungsgemäße Verfahren auch hervorragend zur Durchführung in sehr kleinen Anlagen. Es ist häufig so, daß der Anfall solcher organischer Abfälle, vorzugsweise Kunststoffabfälle, klein oder ihr Transport in große zentrale Anlagen unwirtschaftlich ist. Mit dem erfindungsgemäßen Verfahren jedoch lassen sich auch kleine Mengen an organischen Abfällen, insbesondere reine, gemischte Kunststoffabfälle, sinnvoll und ökonomisch verwerten. Hierzu werden die Abfälle auf eine Korngröße von weniger als 100 vorzugsweise weniger als 50 mm zerkleinert. Anschließend können dann die Abfälle nach einem bekannten Schwerkraft-Trennverfahren in Fraktionen unterschiedlichen spezifischen Gewichtes aufgeteilt werden. Je nach der Zusammensetzung der Abfälle können mehrere verschiedene Fraktionen gewonnen werden, wie z.B.:

a) Metall, Glas, Steine
b) PVC, PTFE, gefüllte Kunststoffe sowie weitere Kunststoffe mit spezifischen Gewichten von über ca. 1g/cm$^3$
c) ungefüllte Polyolefine

In dieser Aufstellung nimmt das spezifische Gewicht von den Metallen zu den Polyolefinen ab. Eine Trennung von halogenhaltigen Kunststoffen, wie z.B. PVC, von den anderen Kunststoffen kann dann vorteilhaft sein, wenn eine problemlose direkte Verbrennung der erzeugten Öle oder Gase in einer Verbrennungsanlage oder einer Wärmekraftanlage, z.B. einem Verbrennungsmotor oder einer Gasturbine, angestrebt wird.

Die organischen Fraktionen werden einem oder mehreren Extrudern die parallel oder bevorzugt hintereinander geschaltet sein können, zugeführt. Dabei können, soweit die Kunststoffe Halogene, in erster Linie Chlor, wie z.B. bei PVC, enthalten, diese bei verhältnismäßig niedriger Temperatur von ca. 300° C in kurzen Verweilzeiten in einer der ersten Stufen der Extrusionsanlage abgespalten werden. Die Kunststoffabfälle werden dann auf höhere Temperaturen von über 350° erhitzt und dabei unter der Einwirkung der Wärme, evtl. Scherung sowie evtl. zugeführter Luft oder zugeführtem Wasser bzw. Wasserdampf und evtl. beigemischter oder injizierter Metalloxyde oder anderer katalytisch die Spaltung der Kunststoffmoleküle beschleunigender Stoffe in niedermolekulare Moleküle gespalten und hierdurch verflüssigt oder vergast. Es ist auch möglich, in bekannter Weise die Schmelze in dem oder den Extrudern zu filtern, um feinpulvrige Mineralzusätze oder ungeschmolzene Anteile auszusondern.

Je nach Zusammensetzung und Konsistenz dieser so aus dem oder den Extrudern schließlich austretenden Molekülbruchstücke können diese nun verbrannt, oder wenn sie ausreichend sauber sind, einer Wärmekraftmaschine, z.B. einem Verbrennungsmotor oder einer Gasturbine, zugeführt werden. Soweit sie sich bei Raumtemperatur verfestigen, können sie granuliert werden oder aufgeschäumt in zerteilter Form, allein oder gemischt mit anderen Stoffen, wie z.B. Holz oder Stroh, in loser granulat- oder pulverförmiger Form oder gepreßt als Brikett oder einer anderen Gestalt abtransportiert oder direkt verwendet werden.

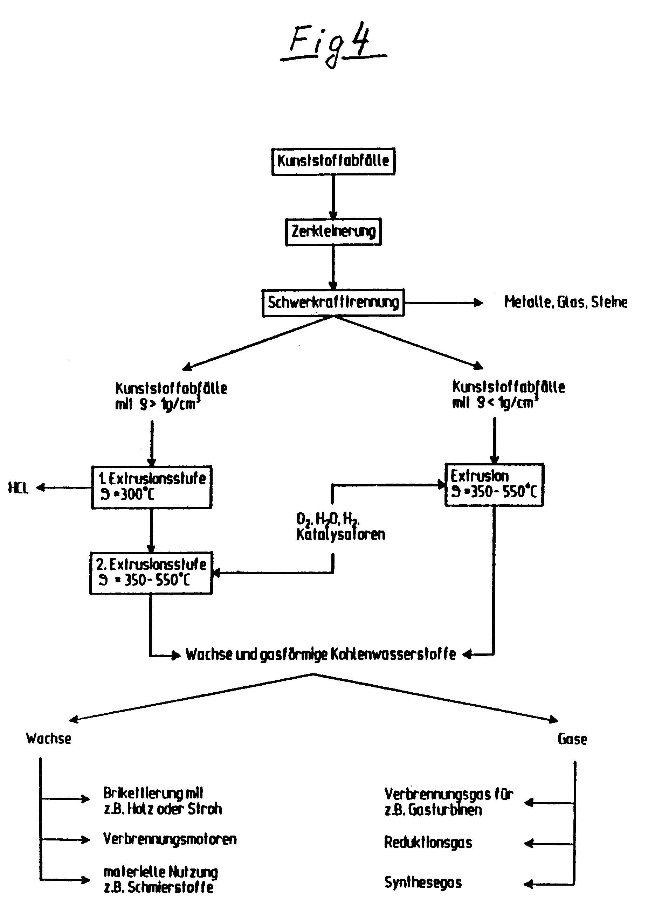

Figur 1 und Figur 4 zeigt je ein Verfahrensfließbild, aus dem das vorbeschriebene Verfahren deutlich wird. Das Verfahrenfließbild spricht für sich und bedarf keiner weitergehenden Erläuterung.

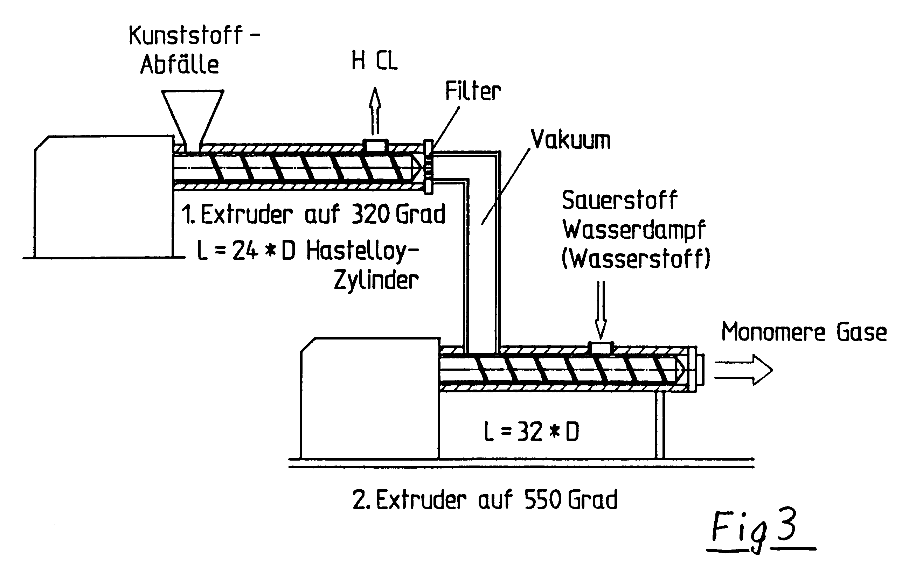

Figur 3 zeigt bezüglich der Anlage nach Figur 2 eine alternative Ausbildung der Extruderstation. Auch Figur 3 spricht für sich, so daß auch hierzu weitere Erläuterungen nicht erforderlich sind. Die Temperaturangaben an den Extrudern sind Grenztemperaturen. Bevorzugte Temperaturen können der Figur 4 entnommen werden.

**Patentansprüche**

1. Verfahren zur Verwertung von mindestens überwiegend aus Makromolekülen bestehenden organischen Abfällen, dadurch gekennzeichnet, daß in einem Reaktionsraum die Abfälle auf mehr als 150° C aufgewärmt unter Druck gesetzt und einer Scherung unterworfen, aufgeschmolzen und abgebaut werden zu niedermolekularen Wachsen, Oelen oder Gasen unter Zusatz von reaktiven Gasen wie Sauerstoff und/oder Wasserstoff und/oder Wasser und/oder Luft und/oder Wasserdampf und/oder Metalle oder Metallverbindungen wie Metalloxide.

2. Verfahren nach Anspruch 1, dadurch gekennzeichnet, daß bei halogenhaltigen Polymerabfällen gleichzeitig eine Enthalogenierung der Polymere durchgeführt wird.

3. Verfahren nach einem der Ansprüche 1 oder 2, dadurch gekennzeichnet, daß die organischen Abfälle kontinuierlich oder chargenweise behandelt werden, wobei mindestens der Wasserstoffanteil in den flüssigen und/oder gasförmigen Bestandteilen kontrolliert und durch Dosierung geeigneter organischer Abfälle beeinflußt wird.

4. Verfahren nach einem der Ansprüche 1 bis 3, dadurch gekennzeichnet, daß vor der Behandlung der Abfälle eine Trennung in die Fraktionen Nichtkunststoffe, Kunststoffe mit spezifischen Gewichten über $1g/cm^3$ und solche unter $1g/cm^3$ erfolgt.

5. Verfahren nach Anspruch 4, dadurch gekennzeichnet, daß die Fraktionen getrennten Behandlungen zugeführt werden, wobei die Fraktionen mit einem spezifischen Gewicht unter $1g/cm^3$ nach dem in den Ansprüchen 1 bis 5 beschriebenen Verfahren zu einem als Reduktionsmittel verwendbaren wasserstoffreichen Gas oder Oel umgewandelt wird.

6. Verfahren nach einem der Ansprüche 1 bis 5, dadurch gekennzeichnet, daß mechanische Verunreinigungen aus der Schmelze entfernt werden.

7. Verfahren nach einem der Ansprüche 1 bis 6, dadurch gekennzeichnet, daß mindestens eine der erzeugten Fraktionen in bekannten Anlagen als mindestens teilweisen Ersatz von bisher dort verwendeten Stoffen oder zusätzlich zur Erzeugung von Synthesegas oder anderen verwertbaren Gasen und /oder Kohlenwasserstoffen oder als Reduktionsmittel eingebracht wird.

8. Verfahren nach einem der Ansprüche 1 bis 7, dadurch gekennzeichnet, daß die Abfälle nach Abbau und Verflüssigung zu Granalien oder durch Versprühen oder ein anderes bekanntes Verfahren zu Pulver verarbeitet und mindestens zusätzlich als Roh- oder Reaktionsstoff in bestehende Anlagen eingebracht wird.

9. Verfahren nach Anspruch 1, dadurch gekennzeichnet, daß ein Chlorinhalt und/oder der Kohlenwasserstoffinhalt der Abfälle zu metallurgischen Reaktionen verwendet wird.

10. Verfahren nach Anspruch 4, dadurch gekennzeichnet, daß eine sich bei der Trennung ergebende PVC-Fraktion mindestens teilweise geschnitzelt oder zu Granulat oder Pulver verarbeitet wird und metallhaltigen und /oder metallverbindungshaltigen Stoffen zum mindestens teilweisen Ersatz von kohlenstoff- und chlorhaltigen Stoffen zugemischt und dann in an sich bekannten metallurgischen Verfahren umgesetzt wird.

11. Verfahren nach Anspruch 4, dadurch gekennzeichnet, daß eine Mischung aus PVC-Abfällen, metall- und/oder metallverbindungshaltigen Stoffen und sonstigen gewünschten weiteren Zuschlagsstoffen erwärmt wird, worauf aus der Gesamtmischung aufgrund der durch die Erwärmung erfolgten Plastifizierung der PVC-Abfalle Pellets oder ähnliches erzeugt wird.

12. Verfahren nach Anspruch 10, dadurch gekennzeichnet, daß die PVC-Fraktion oder die daraus stammenden chlorhaltigen Gase mittels Düsen oder Lanzen in ein flüssiges Metallbad eingebracht und dort zur Entfernung von Verunreinigungen verwendet wird.

13. Verfahren nach Anspruch 8, dadurch gekennzeichnet, daß die PVC-Fraktion in Reaktionsräume bei erhöhter Temperatur eingebracht wird, um dort mit metall- oder metallverbindungshaltigen Stoffen zu reagieren.

14. Verfahren nach Anspruch 13, dadurch gekennzeichnet, daß die PVC-Fraktion zuvor vergast wird.

15. Verfahren nach Anspruch 1, dadurch gekennzeichnet, daß PVC-Abfälle oder andere Halogene enthaltende Kunststoffabfälle in Luft oder inerter Atmosphäre oder unter Luftabschluß beheizt und in einem Zeitraum von 10 Sekunden bis 10 Minuten bei einer Temperatur vom 150°C bis 350°C, bevorzugt bei 250°C bis 350°C, zur Abspaltung der Halogene, insbesondere Chloride, behandelt werden.

16. Verfahren nach Anspruch 15, dadurch gekennzeichnet, daß die abgespaltenen Halogene durch Kondensation oder Auswaschen der bei der Wärmebehandlung entstehenden Gase zurückgewonnen oder mit anderen Stoffen zur Reaktion gebracht werden.

17. Verfahren nach Anspruch 1, dadurch gekennzeichnet, daß mindestens im Laufe der Wärmebehandlung abgespaltene Schadgase abgesaugt und einer Naßwäsche zur Abscheidung zugeführt werden.

18. Verfahren nach Anspruch 17, dadurch gekennzeichnet, daß für die in der Naßwäsche erfolgende Gasreinigung eine wässerige Lösung von Alkali- und/oder Erdalkaliverbindungen verwendet wird.

19. Verfahren nach einem der Ansprüche 1 bis 18, dadurch gekennzeichnet, daß Füllstoffe und/oder Treibgase in die aus den abgebauten Polymerwerkstoffen hergestellten Wachse oder Öle eingearbeitet werden.

20. Verfahren nach Anspruch 1, dadurch gekennzeichnet, daß die verflüssigten und/oder vergasten Bestandteile einer Verbrennung zugeführt werden, wobei die bei der Verbrennung anfallende Wärme an die Umwelt abgegeben oder in weiteren Einrichtungen genutzt wird.

21. Verfahren nach Anspruch 1 bis 18, dadurch gekennzeichnet, daß ein Teil der Abfälle mit Sauerstoff verbrannt wird, wobei die nach dem Verfahren nach Anspruch 1 vorher verflüssigten und/oder vergasten Bestandteile des anderen Teiles in den Rauchgasstrom der Verbrennung des ersten Teiles eingedüst und dadurch ein für eine Synthese geeignetes Gas oder ein Synthesegas erzeugt wird.

**22.** Verfahren nach Anspruch 21 oder 22, dadurch gekennzeichnet, daß ein toxische Stoffe enthaltender und/oder nicht polyolefiner Teil mit Sauerstoff verbrannt wird.

**23.** Verfahren nach Anspruch 21, dadurch gekennzeichnet, daß der Sauerstoffanteil des Verbrennungsmediums über 50% beträgt.

**24.** Verfahren nach Anspruch 21 bis 23, dadurch gekennzeichnet, daß die durch die Eindüsung hergestellte Gasmischung durch Wahl geeigneter Katalysatoren, von Druck und Temperatur in Synthesegas, Brenngas, Reduktionsgas oder andere verwertbare Gase umgewandelt wird.

**25.** Verfahren nach Anspruch 21 bis 23, dadurch gekennzeichnet, daß die durch die Eindüsung hergestellte Gasmischung in bestehende Anlagen zur Herstellung von Synthesegas, Brenngas, Reduktionsgas oder anderen Gasen zum vollständigen oder teilweisen Ersatz bisher verwendeter Vorstoffe oder zusätzlich eingebracht wird.

**26.** Anlage zur Durchführung des Verfahrens nach mindestens einem der Ansprüche 1 bis 25 mit einer Schneckenmaschine und einem Reaktionsraum, dadurch gekennzeichnet, daß der Reaktionsraum von einer oder mehreren der Schneckenmaschinen gebildet wird, die beheizbar ausgebildet und mit Entgasungsöffnungen und Eindüsungsöffnungen ausgerüstet sind und wobei die Anlage weiter eine Aufgabeeinrichtung sowie Sensoren zur Ermittlung gewünschter Zustandsdaten der End- oder Zwischenprodukte enthält und daß weiter Steuer- oder Regeleinrichtungen für die Aufgabeeinrichtung vorgesehen sind, die diese in Abhängigkeit von den Meßergebnissen der Sensoren steuern oder regeln.

**27.** Anlage nach Anspruch 26, dadurch gekennzeichnet, daß eine mit den Schneckenmaschinen verbundene Einrichtung zur Weiterbehandlung mindestens eines Teiles der von der oder den Schneckenmaschinen erzeugten Produkte aufweist.

**28.** Anlage nach Anspruch 27, dadurch gekennzeichnet, daß die Anlage mit einer Stopfschnecke ausgerüstet ist.

**29.** Anlage nach Anspruch 26 bis 28, dadurch gekennzeichnet, daß mindestens ein Filter für die Schmelze zum Ausfiltern feinpulveriger Mineralzusätze oder zum Aussondern ungeschmolzener Anteile vorgesehen ist.

**30.** Anlage nach Anspruch 27, dadurch gekennzeichnet, daß die Einrichtung zur Weiterbehandlung eine Wärmekraftmaschine enthält.

**31.** Anlage nach einem der Ansprüche 26 bis 30, dadurch gekennzeichnet, daß die Anlage einen Separator zur Abtrennung gewünschter Gase aus dem Gasgemisch aufweist.

**Claims**

**1.** A method for the utilization of organic wastes at least made pre-dominantly of macromolecules, characterized in that the wastes in a reaction chamber are heated to more than 150°C, then melted and broken down to low molecular waxes, oils or gases in a reaction chamber under simultanously interweaving of pressure and sheering under the addition of reactive gases, such as oxygen and/or hydrogen and/or water and/or air and/or water vapor and/or metals or metal compounds, such as metal oxides.

**2.** The method of claim 1, characterized in that a dehalogenization of the polymers is performed simultaneously if the polymer wastes contain halogen.

**3.** The method of one of the claims 1 and 2, characterized in that the organic wastes are processed continually or in batches, whereby at least the hydrogen component of the liquid and/or gaseous components is controlled and influenced by doses of suitable organic wastes.

4. The method of one of the claims I to 3, characterized in that prior to treatment the wastes are divided into fractions of nonsynthetic materials, synthetic materials with a specific weight over 1 g/cm$^3$ and such with a specific weight under 1 g/cm$^3$.

5. The method of claim 4, characterized in that the fractions are supplied to separate processings whereby the fractions with a specific weight under 1 g/cm$^3$ are transformed according to the methods described in claims 1 to 5, into a hydrogen-rich gas or oil that can be used as a reduction agent.

6. The method of one of the claims 1 to 5, characterized in that mechanical pollutants are removed from the molten mass.

7. The method of one of the claims 1 to 6, characterized in that at least one of the fractions produced is brought into conventional plants as at least a partial replacement of the materials heretofore used therein or in addition for producing synthesis gas or other useable gases and/or hydrocarbons, or as a reduction agent.

8. The method of one of the claims I to 7, characterized in that after breaking down and liquifying, the wastes are granulated or made into a powder by spraying or another conventional method, and are brought at least additionally as raw materials or reaction materials into existing plants.

9. The method of claim 1, characterized in that a chlorine content and/or the hydrocarbon content of the wastes is used in metallurgic reactions.

10. The method of claim 4, characterized in that a PVC fraction produced by the separation is at least partially shredded or made into granules or powder, and is mixed with metal containing and/or metal compound containing materials, for at least partly replacing carbon and chlorine containing materials, and is then converted into conventional metallurgic processes.

11. The method of claim 4, characterized in that a mixture of PVC wastes, metal and/or metal compound containing materials and othe desired further additives, is heated, whereupon due to the plastification of the PVC wastes due to the heating from this total mixture pellets or the like are formed.

12. The method of claim 10, characterized in that the PVC fraction or the chlorine containing gases arising from said fraction are brought into a liquid metal bath by means of nozzles or lances, and are used there for the removal of pollutants.

13. The method of claim 8, characterized in that the PVC fraction is brought into reaction chambers at an increased temperature, in order to react there with metal or metal compound containing materials.

14. The method of claim 13, characterized in that the PVC fraction is first gasified.

15. The method of claim 1, characterized in that the PVC wastes or other halogen containing synthetic material wastes are heated in air or an inert atmosphere or in the absence of air and are processed for a time duration of 10 seconds to 10 minutes at a temperature of 150°C to 350°C, preferably between 250°C to 350°C, in order to split off the halogens, especially chloride.

16. The method of claim 15, characterized in that the split off halogens are regained by condensation or washing out of the gases produced by the heating treatment or they are brought into reaction with other materials.

17. The method of claim 1, characterized in that at least the toxic gases split off during the heating process, are suctioned off and led to a wet wash for separation.

18. The method of claim 17, characterized in that an aqueous solution of alkaline and/or earth alkaline compounds is used for the gas purification taking place in the wet wash.

19. The method of one of the claims 1 to 18, characterized in that filler materials and/or fouming gases are worked into the waxes or oils produced of the broken-down polymer materials.

14

# EP 0 531 371 B1

**20.** The method of claim 1, characterized in that the liquified and/or gasified components are led to an incineration, wherein the heat produced by the incineration is given off into the environment or used in further devices.

**21.** The method of claims 1 to 18, characterized in that a portion of the wastes are incinerated with oxygen, whereby the components of the other portion which are liquified and/or gasified according to the method of claim 1, are injected into the flue gas stream of the incineration of the first portion, and thereby a gas suitable for synthesis or a synthesis gas is produced.

**22.** The method of claim 20 or 21, characterized in that a portion that contains toxic materials and/or a no-polyolefin portion is incinerated with oxygen.

**23.** The method of claim 21, characterized in that the incineration medium has an oxygen content of over 50%.

**24.** The method of claims 21 to 23, characterized in that the gas mixtur produced by the injection is transformed, by the choice of suitable catalysts, pressure and temperature, into synthesis gas, fuel gas, reduction gas or other useable gases.

**25.** The method of claims 21 to 23, characterized in that the gas mixtur produced by the injection, is introduced into existing systems to produce synthesis gas, fuel gas, reduction gas or other useable gases as a complete or partial replacement for the materials hereto used therein, or in addition to these materials.

**26.** A system for carrying out the method of claims 1 to 25, having a worm machine and a reaction chamber, characterized in that the reaction chamber is formed by one or more worm machines, which are constructed to be heatable and have openings for gas removal and injection openings, and with a device connected to the worm machines consisting of a delivery unit and sensors for providing desired data about the conditions of the end and intermediate products, which control said delivery unit in open or closed loop manner in response to the measurements of said sensors.

**27.** The system of claim 26, characterized in that the one of the with the worm machine /or machines connected downstream facilities uses at least one part of the from these worm machines delivered products

**28.** The system of claim 27, characterized in that the system comprises a packing-in worm feeder.

**29.** The system of claims 28 and 29, characterized in that at least one filter is provided for the molten mass to filter out finegrained mineral additives or to separate out non-molten components.

**30.** The system of claim 27, characterized in that the system comprises for further processing a thermal combustion engine.

**31.** The system of one of the claims 26 to 30, characterized in that the system has a separator for separating desired gases from the gas mixture.

## Revendications

**1.** Procédé de recyclage de déchets constitués en majorité de matière organique macromoléculaire, caractérisé en ce que lesdits déchets sont chauffés à des températures supérieures à 150°C sous pression dans un espace réactionnel puis cisaillés, fondus et dégradés en des produits de poids moléculaire plus faible que la matière première, comme par exemple des huiles, ou des gaz à l'aide de gaz réactifs, oxygène, hydrogène, air, eau, vapeur d'eau et/ou à l'aide de matières métalliques ou à liaisons métalliques comme les oxydes de métaux.

**2.** Procédé selon la Revendication 1, caractérisé en ce qu'on effectue une déshalogénation simultanée des déchets de polymères halogénés.

15

3. Procédé selon l'une quelconque des Revendications précédentes, caractérisé en ce que les déchets organiques sont traités en continu ou par lots, à l'occasion de quoi la proportion en hydrogène dans les composants liquides et/ou gazeux est contrôlée et influencée par la quantité de déchets organiques propres.

4. Procédé selon les Revendications 1 à 3, caractérisé en ce qu'on effectue une séparation fractionnelle des déchets avant leur traitement en matières non plastiques, en matières plastiques ayant une masse volumique supérieure à 1g/cm$^3$ et en matières plastiques ayant une masse volumique inférieure à 1g/cm$^3$.

5. Procédé selon la Revendication 4, caractérisé en ce que les fractions conduisent à des traitements séparés, à l'occasion desquels lesdites fractions ayant une masse volumique inférieure à 1g/cm$^3$ selon le procédé décrit par les Revendications 1 à 5, sont transformées en gaz ou en huiles riches en hydrogène utilisables comme réducteurs.

6. Procédé selon les Revendications 1 à 5, caractérisé en ce qu'on retire de la matière fondue les souillures métalliques.

7. Procédé selon les Revendications 1 à 6, caractérisé en ce qu'au minimum une des fractions produites dans des installations connues est introduite au moins partiellement en remplacement ou en complément lors de l'élaboration de gaz de synthèse ou d'autres gaz exploitables et/ou de carbures d'hydrogène ou comme agent réducteur.

8. Procédé selon les Revendications 1 à 7, caractérisé en ce que les déchets sont transformés après dégradation et liquéfaction en granulés ou en poudre par projection ou un autre procédé connu et au minimum utilisés comme matière première ou réactive dans les installations existantes.

9. Procédé selon la Revendication 1, caractérisé en ce qu'on utilise le contenu en chlore et en carbure d'hydrogène des déchets dans les réactions métallurgiques.

10. Procédé selon la Revendication 4, caractérisé en ce qu'une fraction en PVC obtenue par séparation est au moins partiellement déchiquetée ou transformée sous forme de granulé ou de poudre, mélangée à des matières métalliques ou à liaisons métalliques pour remplacer au moins partiellement des matières carbonées ou contenant du chlore et ainsi être utilisés dans des procédés métallurgiques connus.

11. Procédé selon la Revendication 4, caractérisé en ce qu'on chauffe un mélange de déchets de PVC, de matières métalliques et/ou à liaisons métalliques et d'autres matières supplémentaires particulières souhaitées, afin de produire des pellets ou similaires à partir de ce mélange en raison de la plastification des déchets de PVC par échauffement.

12. Procédé selon la Revendication 10, caractérisé en ce que la fraction en PVC ou les gaz chlorés qui en résultent, sont injectés par l'intermédiaire de buses ou de tuyères dans un bain métallique liquide ainsi purifié.

13. Procédé selon la Revendication 8, caractérisé en ce qu'on incorpore la fraction en PVC dans des espaces réactionnels à hautes températures pour permettre une réaction avec des matières métalliques ou à liaisons métalliques.

14. Procédé selon la Revendication 13, caractérisé en ce qu'on gazéifie auparavant la fraction en PVC.

15. Procédé selon la Revendication 1, caractérisé en ce que les déchets de PVC ou d'autres contenant des halogènes sont réchauffés dans l'air, en atmosphère inerte ou à l'abri de l'air et traités pendant une période de 10 secondes à 10 minutes avec une température de 150 à 350°C (de préférence entre 250 et 350°C), afin de séparer les halogènes, et particulièrement les chlorures.

16. Procédé selon la Revendication 15, caractérisé en ce que les halogènes séparés sous forme de gaz lors du traitement thermique sont soit réobtenus par condensation ou lavage lors d'un traitement thermique ou soit utilisés avec d'autres matières pour réaction.

EP 0 531 371 B1

**17.** Procédé selon la Revendication 1, caractérisé en ce que, lors du traitement thermique, on aspire les gaz toxiques séparés et on effectue un lavage humide afin d'obtenir un précipité.

**18.** Procédé selon la Revendication 17, caractérisé en ce qu'on utilise une solution aqueuse alcaline ou alcalino-terreuse pour le lavage humide des gaz produits.

**19.** Procédé selon les Revendications 1 à 18, caractérisé en ce que des additifs et/ou des gaz moussants sont incorporés dans les cires ou les huiles produites à partir des dégradations de polymères.

**20.** Procédé selon la Revendication 1, caractérisé en ce que les composants liquides ou gazeux conduisent à une combustion au cours de laquelle de la chaleur est libérée dans le milieu environnant ou utilisée à d'autres fins.

**21.** Procédé selon les Revendications 1 à 18, caractérisé en ce qu'on brûle une partie des déchets avec de l'oxygène, à l'occasion de quoi les composants auparavant liquides et/ou gazeux de l'autre pièce suite au procédé selon la Revendication 1 sont réintroduits dans le flux des émissions de la combustion de la première pièce et produisent ainsi un gaz adéquat pour une synthèse ou un gaz de synthèse.

**22.** Procédé selon la Revendication 21 ou la Revendication 22, caractérisé en ce qu'une matière toxique et/ou une matière ne contenant aucune polyoléfine sont brûlées en présence d'oxygène.

**23.** Procédé selon la Revendication 21, caractérisé en ce que le taux en oxygène dans le milieu est supérieur à 50%.

**24.** Procédé selon les Revendications 21 à 23, caractérisé en ce que le mélange de gaz produit lors de l'injection est transformé de par un choix adéquat de catalysateur, de température et de pression en gaz de synthèse, de combustion, de réduction ou en tout autre gaz utilisable.

**25.** Procédé selon les Revendications 21 à 23, caractérisée en ce que le mélange de gaz produit lors de l'injection est introduit dans des installations existantes pour l'élaboration de gaz de synthèse, de combustion, de réduction ou de tout autre gaz, en remplacement partiel de composants jusqu'ici utilisés ou en complément.

**26.** Installation pour la mise en oeuvre du procédé selon l'une quelconque des Revendications précédentes, avec une machine équipée d'une vis sans fin (boudineuse) et un espace réactionnel, caractérisée en ce que l'espace réactionnel est formé par une ou plusieurs boudineuses, d'éléments chauffants, de clapets de dégazage et d'ouvertures pour injection pour lesquelles l'installation est dotée d'un système d'alimentation et d'un système de mesure comme par exemple des capteurs pour la saisie de données concernant l'état des produits finis ou intermédiaires et qui agissent en rétroaction sur la régulation desdits systèmes.

**27.** Installation selon la Revendication 26, caractérisée en ce qu'une des installations pour le traitement ultérieur en relation avec la boudineuse reçoit au moins une pièce produite par la ou les boudineuses.

**28.** Installation selon la Revendication 27, caractérisée en ce que l'installation est équipée avec une vis sans fin et un bourreur.

**29.** Installation selon les Revendications 26 à 28, caractérisée en ce qu'au moins un filtre pour la matière fondue est prévu pour filtrer les additifs minéraux sous forme de fine poudre ou pour retenir les infondus.

**30.** Installation selon la Revendication 27, caractérisée en ce que l'installation pour le traitement ultérieur est dotée d'une machine thermique.

**31.** Installation selon les Revendications 26 à 30, caractérisée en ce que l'installation est équipée d'un séparateur pour dissocier les gaz souhaités du mélange.

17

Figur 1

Verfahrensfließbild

Kunststoff-Abfall-Schnitzel · Meßfühler · Sauerstoff · Wasserdampf · Abhitze-Kessel · rußfreies Synthesegas · Zylindertemperatur 400 Grad · Reaktor · Brenner · Ruß-wäscher · Gas-wäscher · Öl · Ruß · Wasser · rußfreies Wasser

Fig 2

Fig 3

# $Fig4$

Kunststoffabfälle

↓

Zerkleinerung

↓

Schwerkrafttrennung → Metalle, Glas, Steine

Kunststoffabfälle mit $\vartheta > 1g/cm^3$

Kunststoffabfälle mit $\vartheta < 1g/cm^3$

HCL ← 1. Extrusionsstufe $\vartheta = 300°C$

Extrusion $\vartheta = 350 - 550°C$

$O_2, H_2O, H_2$, Katalysatoren

2. Extrusionsstufe $\vartheta = 350 - 550°C$

→ Wachse und gasförmige Kohlenwasserstoffe ←

Wachse

Gase

Brikettierung mit z.B. Holz oder Stroh

Verbrennungsmotoren

materielle Nutzung z.B. Schmierstoffe

Verbrennungsgas für z.B. Gasturbinen

Reduktionsgas

Synthesegas